# EUROPÄISCHE PATENTSCHRIFT

(11) **EP 3 461 623 B1**
(45) Veröffentlichungstag und Bekanntmachung des Hinweises auf die Patenterteilung: **02.06.2021**
(21) Anmeldenummer: 18000755.1
(22) Anmeldetag: 03.03.2011
(51) Int. Cl.: B29C 70/38, B29C 70/74, B60B 5/02, B29B 11/16, B29L 31/32

(54) **VERFAHREN ZUR HERSTELLUNG EINES HOHLPROFILARTIGEN BAUTEILS**
METHOD FOR PRODUCING A HOLLOW PROFILE COMPONENT
PROCÉDÉ DE FABRICATION D'UN COMPOSANT À PROFIL CREUX

(30) Priorität: 05.03.2010 DE 102010010512
(43) Veröffentlichungstag der Anmeldung: 03.04.2019
(62) Teilanmeldung aus: 11001772.0
(73) Patentinhaber: ThyssenKrupp Carbon Components GmbH, 01723 Wilsdruff STT Kesselsdorf (DE)
(72) Erfinder: Hufenbach, Werner, D-01324 Dresden (DE); Lepper, Martin, D-01279 Dresden (DE); Werner, Jens, D-01640 Coswig (DE)
(74) Vertreter: Meissner Bolte Partnerschaft mbB

(56) Entgegenhaltungen:
- DE-A1-102006 051 867
- US-A- 4 532 097

## Beschreibung

Die Erfindung betrifft ein Verfahren zur Herstellung eines hohlprofilartigen Bauteils, insbesondere zur Herstellung einer Radfelge zum Einsatz in der Kraftfahrzeugtechnik, bestehend aus einem ersten Bauelement aus Faserverbundwerkstoff und einem zweiten Bauelement, wobei in einer Vorfertigungsphase zur Vorfertigung des ersten Bauelements eine Preform dieses Bauelements durch Ablage eines Fasermaterials auf einem die Kontur des Bauelements abbildenden Formwerkzeug gebildet wird.

Es ist bereits bekannt, hohlprofilartige Bauteile, insbesondere Räder beziehungsweise Radfelgen, für Leichtbauanwendungen vollständig oder partiell aus Faserverbundwerkstoff zu fertigen.

Werden die Bauteile monolithisch (ganzheitlich) aus Faserverbundstoff hergestellt, wird auf einem Formwerkzeug, das das Bauteil abbildet, Fasermaterial manuell oder maschinell abgelegt, angeformt und zu einer Preform gebildet. Diese Preform ist ein der Bauteilgeometrie entsprechend geformtes Fasergebilde als Zwischenprodukt, welche anschließend durch Konsolidierung (Wärmebehandlung und /oder Imprägnierung mit Zusatzstoffen) verfestigt wird.

Eine derartige ganzheitliche Herstellung einer Radfelge aus Faserverbundwerkstoff ist aus der Druckschrift DE 10 2005 041 940 A1 bekannt. Diese Radfelge wird einteilig aus einem Geflechtschlauch hergestellt, wobei der Geflechtschlauch über Stützkerne oder zueinander fixierte Ringe, die die Form der Radfelge ergeben, gezogen und fixiert wird, anschließend der vorfixierte Schlauch zur Konsolidierung in ein Konsolidierungswerkzeug eingebracht und mit einem Matrixmaterial infiltriert wird. Damit werden mit einem einzigen Geflechtschlauch sowohl die Radscheibe als auch das Felgenbett mit den Felgenhörnern ausgebildet.

Resultierend aus der Geometrie der hohlprofilartigen Bauteile, beziehungsweise Radfelgen, ist eine monolithische (ganzheitliche) Herstellung aus Faserverbundwerkstoff nur mit sehr hohem manuellem Aufwand möglich. Außerdem ergeben sich aufgrund der eingeschränkten Möglichkeiten der Ausrichtung der Fasern erhebliche Nachteile hinsichtlich der mechanischen Beanspruchbarkeit solcher hohlprofilartigen Bauteile, beziehungsweise Radfelgen.

Entsprechend der Anforderungen des Leichtbaus und der Beanspruchbarkeit werden insbesondere Radfelgen, belastungsspezifisch in Einzelteilen vorgefertigt und anschließend zusammengefügt. Dabei können in großer Variation vorgefertigten Bauelemente aus Faserverbundstoff mit individueller Faserstruktur und -ausrichtung miteinander oder mit Bauelementen aus anderweitigem Material, wie Metall, kombiniert werden.

Die Druckschriften DE 10 2006 051867 A1, US 4 532 097 A, DE 41 23 459 C1, DE 101 45 630 A1 und DE 20 2005 004 399 U1 beschreiben jeweils die Fertigung eines Rades bzw. einer Radfelge aus Einzelteilen, die form-/kraft-/oder stoffschlüssig zusammengefügt werden.

Bei der Radfelge nach der Druckschrift DE 41 23 459 C1 und der DE 20 2005 004 399 U1 besteht das Felgenbettes aus Kunststoff und die Radschüssel bzw. innere Speicheneinheit aus Metall. Bei der Radfelge nach der Druckschrift DE 101 45 630 A1 sind die einzelnen Bestandteile des Rades bzw. der Radfelge jeweils aus Faserverbundwerkstoff mit unterschiedlicher Verteilung und Ausrichtung der Faserstränge belastungsgerecht vorgefertigt, bevor sie zusammengefügt werden. Nach einer Ausführungsform sind die Einzelteile jeweils aus unidirektionalen Endlosfasersträngen gefertigt, wobei das Felgenbett in einem Wickelprozess und die Radschüssel bzw. der Radstern im bekannten Resintransfer Moulding Verfahren hergestellt sind.

Die separate Vorfertigung der Bauelemente erfordert allerdings einen zusätzlichen Fügeprozess. Außerdem bilden die Verbindungen der Bauelemente bei hohen Belastungen des hohlprofilartigen Bauteils kritische Schwachstellen und sind insbesondere bei der zu erwartenden mechanischen Belastung einer Radfelge problematisch. Beispielsweise muss die Verbindung zwischen dem Felgenbett und der Radschüssel hohe Drehmomente, besonders beim Bremsvorgang, aufnehmen. An die Verbindung der Bauelemente sind daher große Anforderungen gestellt, so dass der zusätzliche Fügeprozess mit einem erheblichen technischen Aufwand verbunden ist, wie in den Druckschriften DE 20 2005 004 399 U1 und DE 20 2005 004 399 U1 ausführlich beschrieben ist.

Die aus Faserverbundwerkstoff vorgefertigten Bestandteile der Radfelge nach der Druckschrift DE 101 45 630 A1 sind miteinander verklebt. Allerdings belegt auch der Stand der Technik nach der Druckschrift DE 20 2005 004 399 U1, dass eine reine stoffliche Verbindung der Bauelemente für den Einsatz bei Radfelgen in der Kraftfahrzeugtechnik nicht zielführend ist, da die hiermit erreichbare mechanische Festigkeit und Temperaturbeständigkeit im Verbindungsbereich nicht ausreichen.

Der Erfindung liegt deshalb die Aufgabe zugrunde, ein Verfahren zur Herstellung eines hohlprofilartigen Bauteils, insbesondere zur Herstellung einer Radfelge, aus Bauelementen bereitzustellen, bei dem die Bauelemente unter Gewährleistung einer hohen Festigkeit mit geringem fertigungstechnischem Aufwand verbunden werden können.

Die Aufgabe wird erfindungsgemäß mit den Merkmalen des Patentanspruches 1 gelöst.

Vorteilhafte Ausgestaltungen und Weiterbildungen der Erfindung ergeben sich aus den abhängigen Patentansprüchen 2 bis 12.

Erfindungsgemäß wird vorgeschlagen, dass das zweite Bauelement derart dimensioniert und angeordnet ist, dass es im Verhältnis zur Umfangskontur des Formwerkzeuges einen radialen, vorzugsweise umlaufenden Überstand über dem Formwerkzeug und/oder eine radiale, vorzugsweise umlaufende Vertiefung gegenüber dem Formwerkzeug bildet, sodass eine Hinterschnittverbindung mit einer konvexen Ausformung oder mit einer konkaven Ausformung des aufliegenden Fasermaterials entlang der Kontur entsteht.

Hierdurch werden bereits während dieser Vorfertigungsphase die Bauelemente zusammengefügt. Die hierbei erzeugte formschlüssige Verbindung genügt, um das Gefüge zu fixieren und als eigenständiges Zwischenprodukt für nachfolgende Fertigungsschritte bereitzustellen. Der zusätzliche Fertigungsschritt des nachträglichen Fügens der Bauelemente wird hierdurch eingespart. Die formschlüssige Verbindung ermöglicht überdies eine in vielen Variationen ausgeprägte, belastungsgerechte Verbindung von Bauelementen gleicher oder verschiedener Materialien. Neben der Herstellung von aus verschiedenen Faserverbundwerkstoffen bestehenden mehrteiligen Bauteilen bzw. Radfelgen erlaubt das erfindungsgemäße Verfahren auch die Herstellung von aus verschiedenen Materialien bestehenden Hybrid-Bauteilen bzw. Hybrid-Radfelgen.

Erfindungsgemäß wird das zweite Bauelement derart dem Formwerkzeug beigeordnet und dimensioniert, dass beim Ablegen des Fasermaterials eine umlaufende Kontur des zweiten Bauelementes zumindest teilweise umschlossen wird. Bei dieser Ausführungsform wird die formschlüssige Verbindung mit besonders einfachen Mitteln erzeugt, nämlich durch Herausbildung einer von dem Formwerkzeug abgesetzten Kontur des beigeordneten zweiten Bauelementes, die während des Ablageprozesses des Fasermaterials auf dem Formwerkzeug einen Einschluss erfährt.

In einer bevorzugten Ausführungsform des erfindungsgemäßen Verfahrens wird nach der Vorfertigungsphase die Preform konsolidiert und während der Konsolidierung mit dem zweiten Bauelement stoffschlüssig verbunden. Die Konsolidierung der Preform kann beispielsweise durch kurzzeitiges Aufschmelzen des Fasergeflechtes und Verharzen erfolgen. Durch die Aufschmelzung und Verharzung der Preform erfolgt gleichzeitig eine Verklebung der formschlüssig fixierten Bauelemente. So wird in demselben Fertigungsschritt neben der Verfestigung der Preform zugleich und unmittelbar die für die Stabilität des Bauteils erforderliche unlösbare Verbindung der Bauelemente realisiert. Auch hieraus ergeben sich erhebliche fertigungstechnische Einsparungen.

In vorteilhaften Ausführungsformen des Verfahrens kann die Preform durch Umflechten des Formwerkzeuges mittels Faserflechtfäden und/oder durch Bandwickeln von Fasersträngen um das Formwerkzeug und/oder durch Tapelegen von textilem flächigem Fasermaterial auf das Formwerkzeug gebildet werden, die bedarfsgerecht zur Herstellung des Bauteils angewendet werden können. Je nach dem Einsatzfall des herzustellenden Bauteils sorgen die verschiedenen Auflageprozesse für eine gute Anpassung des Fasermaterials an die Kontur des Formwerkzeuges und des mitgeführten Bauelementes.

Beim Umflechten werden das Formwerkzeug und das mitgeführte Bauelement als Flechtkern von Flechtfäden umflochten, die von einem den Flechtkern koaxial umlaufenden Flechtrahmen zugeführt werden. Der Flechtkern bewegt sich dazu axial vor und zurück, so dass hierbei die Ablage der Flechtfäden auf dem Flechtkern bzw. dem Formwerkzeug und dem mitgeführten Bauelement axial, in Richtung der Drehachse des Flechtrahmens, erfolgt. Die maschinelle Umflechtung des Formwerkzeuges ermöglicht mittels eines gesteuerten Flechtprozess die Strukturen des auf dem Formwerkzeug abgelegten Fasergeflechts individuell zu gestalten und somit Preformen (und folglich Bauelemente) mit örtlich differenzierter Beschaffenheit zu erzeugen.

Bei dem Bandwickel- und Tapelegeprozess wird hingegen ein strang- oder bandförmiges Fasermaterial tangential auf das sich drehende Formwerkzeug und mitgeführte Bauelement appliziert, wodurch alternative Ablagestrukturen des Fasermaterials erzeugt werden können. Durch die Rotation der Einheit aus Formwerkzeug und Bauelement wird das Endlos-Fasermaterial von Vorratstrommeln straff auf das Formwerkzeug und das mitgeführte Bauelement aufgezogen. Das strang- oder bandförmige Fasermaterial kann vorkonfektionierte Fasergelege oder -gewebe sein. Das bandförmige Fasermaterial kann auch ein Fasergeflecht aus Flechtfäden sein, welches für eine besonders gute Anpassung an die Kontur des Formwerkzeuges und des mitgeführten Bauelementes sorgt.

In einer vorteilhaften Ausgestaltung des Verfahrens wird das Fasermaterial durch eine Stützvorrichtung an die Kontur des Formwerkzeuges und/oder an die Kontur des zweiten Bauelementes angedrückt. Damit kann eine kontrollierte Feinpositionierung der Ablage des Fasermaterials an die jeweiligen Konturen erfolgen, wodurch die Genauigkeit der Anformung an die vorgegebenen Konturen erhöht werden kann. Insbesondere kann hierdurch das korrekte Anlegen des Fasermaterials im Bereich der formschlüssigen Verbindung gesichert worden, was die Zuverlässigkeit der Verbindung erhöht.

Vorzugsweise weist die Stützvorrichtung drehbewegliche Führungselemente auf. Somit kann während der Rotation des Formwerkzeuges oder infolge einer koaxialen Rotation der Stützvorrichtung um das Formwerkzeug eine Relativbewegung der Führungselemente gegenüber dem Formwerkzeug erzeugt werden. Dadurch kann der Anformungs- und Anpressvorgang des Fasermaterials vereinfacht und beschleunigt worden.

Im Interesse der Leichtbauweise besteht das zweite Bauelement aus Faserverbundwerkstoff. Der Einsatz von Faserverbundwerkstoff ermöglicht es außerdem, spezifische, an die mechanischen und thermischen Belastungen angepasste Verstärkungsstrukturen im Bauteil vorzusehen. Das zweite Bauelement kann beispielsweise ein bereits konsolidiertes Faserverbundteil mit einer vom Faserverbundwerkstoff des ersten Bauelementes abweichender Faserstruktur sein.

Alternativ besteht das zweite Bauelement aus Metall, da es für bestimmte Einsatzfalle dem Bauteil eine besondere thermische Belastbarkeit und Festigkeit verleiht.

Beide Werkstoffarten sind insbesondere bei der Fertigung von Radfelgen von Bedeutung, je nach dem für welchen Zweck die Radfelgen vorgesehen sind. Beispielsweise kann bei einer Radfelge mit einem zu erwartenden intensiven Bremsbetrieb ein Bauelement aus Metall als Radscheibe vorgesehen sein und erfindungsgemäß mit einem Felgenbett aus Faserverbundwerkstoff verbunden werden, so dass die beim Bremsen erzeugte Wärme gut von der Bremsscheibe abgeleitet werden kann. Bei dieser Hybrid-Radfelge in Kombination aus einem Felgenbett aus Faserverbundwerkstoff und einer Radscheibe aus Metall bleibt die Leichtbauweise weitestgehend erhalten.

Vorzugsweise ist das in der Vorfertigungsphase mit der Preform zu verbindende zweite Bauelement ein Preformling aus Fasermaterial, welches noch zu verschmelzen ist und/oder mit Fasermatrixmaterial zu versetzen ist. Diese Halbzeuge eignen sich besonders für die erfindungsgemäße Verbundtechnologie zur Herstellung des mehrteiligen Bauteils. Ist ein solcher Preformling als zweites Bauelement vorgesehen, kann die Konsolidierung des Preformlings gemeinsam mit der Konsolidierung der Preform des ersten Bauelementes erfolgen, was zu weiteren fertigungstechnischen Einsparungen führt.

Die Variationsmöglichkeiten für die Herstellung des mehrteiligen Bauteils erhöhen sich auch durch ein ausgebildetes Formwerkzeug. Das mehrteilige Formwerkzeug kann, vorzugsweise unter Beiordnung oder Einschluss diverser Bauelemente, zu einer individuellen Werkzeugeinheit komplettiert werden, auf die anschließend zur Formgebung der Preform des ersten Bauelementes das Fasermaterial abgelegt wird.

In einer bevorzugten Ausführungsform des Verfahrens zur Herstellung einer Radfelge ist das erste Bauelement ein Felgenbett einer Radfelge und das zweite Bauelement eine Radscheibe, wobei während der Vorfertigungsphase des Felgenbettes die Radscheibe zwischen zwei die Kontur des Felgenbettes abbildenden Teilwerkzeugen des Formwerkzeuges angeordnet ist.

An die Radscheibe sind gegenüber dem Felgenbett einer Radfelge besonders verschiedene Anforderungen gestellt. Durch das erfindungsgemäße Verfahren können Bauelemente mit höchst differenzierter Beschaffenheit, wie bei der Radscheibe und dem Felgenbett der Fall ist, mit einfachen Mitteln und mit geringem fertigungstechnischem Aufwand zuverlässig zusammengefügt werden.

In einer besonders vorteilhaften Ausführungsform ist das zweite Bauelement derart dimensioniert, dass es im Verhältnis zum Umfang des Formwerkzeuges einen radialen, vorzugsweise umlaufenden Überstand über dem Formwerkzeug und/oder eine radiale, vorzugsweise umlaufende Vertiefung gegenüber dem Formwerkzeug bildet.

Damit ergeben sich über den Umfang des Formwerkzeuges nach außen bzw. nach innen weisende Absätze zwischen dem Formwerkzeug und dem Bauelement, die während des Faserablageprozesses eine unlösbare Hinterschnittverbindung mit vergrößerten Kontaktflächen zwischen der Preform und dem zweiten Bauelement ergeben. Dies verleiht der formschlüssigen Verbindung einen sicheren Halt und erhöht die Haftung zwischen dem ersten und zweiten Bauelement, was sich besonders vorteilhaft auf die Beanspruchbarkeit der Gesamtstruktur der gefügten Preform bzw. des fertig gestellten Bauteils auswirkt.

Die Konsolidierung der Preform und/oder des Preformlings mittels einer Injektion, vorzugsweise mittels Harzinjektion, intensiviert zugleich den strukturellen wie auch den verbindenden Stoffschluss, was folglich die Wirtschaftlichkeit und Qualität der Bauteilfertigung, insbesondere der Fertigung der Radfelge, verbessert.

Zudem ist es vorteilhaft, wenn bei der Konsolidierung der Preform und/oder des Preformlings ein Gegenformwerkzeug eingesetzt wird. Das Gegenformwerkzeug, welches die äußere Kontur des ersten Bauelementes der Preform abbildet, unterstützt das korrekte Anlegen und Fixieren des Fasermaterials auf dem Formwerkzeug und dem beigeordneten Bauelement wahrend der Konsolidierung. Insbesondere kann hierdurch das korrekte Anlegen des Fasermaterials im Bereich der formschlüssigen Verbindung gesichert werden.

Nachstehend wird das erfindungsgemäße Verfahren anhand eines Ausführungsbeispiels näher erläutert. Die zugehörigen Zeichnungen zeigen in einer schematischen Darstellung in
- Fig. 1: einen Ausschnitt einer Bandwickelanordnung mit einem zweiteiligem Formwerkzeug eines Felgenbettes einer Radfelge und einem zwischenliegendem Preformling einer Radscheibe der Radfelge in einer Seiten- und Schnittansicht,
- Fig. 2a: eine Detailansicht X der Werkzeugeinheit nach Fig. 1 in einer ersten Variante der Verbindung der Preformlings der Radscheibe mit der Preform des Felgenbettes,
- Fig. 2b: eine Detailansicht X der Werkzeugeinheit nach Fig. 1 in einer zweiten Variante der Verbindung eines Preformlings der Radscheibe mit der Preform des Felgenbettes,
- Fig. 2c: eine Detailansicht X der Werkzeugeinheit nach Fig. 1 in einer dritten Variante der Verbindung eines Preformlings der Radscheibe mit der Preform des Felgenbettes
- Fig. 3: eine stilisierte Ansicht eines zweiteiligen Formwerkzeuges mit einem Preformling einer Radscheibe in einer ersten Herstellungsphase der Radfelge,
- Fig. 4: Ansicht der Werkzeugeinheit nach Fig. 3 in einer zweiten Herstellungsphase der Radfelge,
- Fig. 5: Ansicht der Werkzeugeinheit nach Fig. 3 in einer dritten Herstellungsphase der Radfelge,
- Fig. 6: Ansicht der Werkzeugeinheit nach Fig. 3 in einer vierten Herstellungsphase der Radfelge,
- Fig. 7: Ansicht der Werkzeugeinheit nach Fig. 3 in einer fünften Herstellungsphase der Radfelge,
- Fig. 8: stilisierte Ansicht einer gefügten Preform der Radfelge in einer sechsten Herstellungsphase der Radfelge.

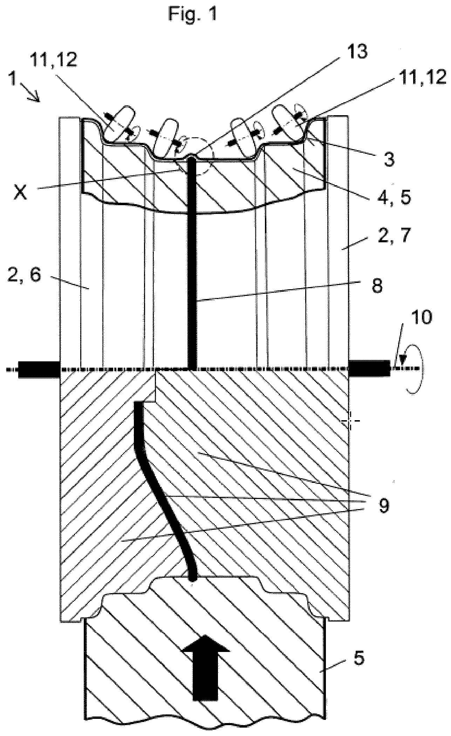

Fig. 1 zeigt einen Ausschnitt einer Bandwickelanordnung 1 mit einem Formwerkzeug 2, das an seinem Umfang die Kontur 3 eines Felgenbettes einer Radfelge abbildet. Zur Herstellung einer Preform 4 des Felgenbettes aus Faserverbundwerkstoff wird ein textiles flächiges Fasermaterial 5 auf das Formwerkzeug 2 aufgewickelt.

Das Formwerkzeug 2 besteht aus zwei Teilwerkzeugen 6, 7 zwischen denen ein Preformling 8 aus strukturverstärkten TFP-Fasergelege (TFP-TAILORED FIBER PLACEMENT) für die Fertigung einer Radscheibe angeordnet ist. Diese Anordnung aus Teilwerkzeugen 6, 7 und zwischengelagerten Preformling 8 bildet eine Werkzeugeinheit 9 der Bandwickelanordnung 1.

Durch Rotation der Werkzeugeinhoit 9 um eine Rotationsachse 10 wird das Endlos-Fasermaterial 5 von einer nicht dargestellten Vorratstrommel straff auf das Formwerkzeug 2 und den mitgeführten Preformling 8 aufgewickelt. Das bandförmige Fasermaterial 5 ist in diesem Ausführungsbeispiel ein vorkonfektioniertes Fasergelege.

Bei der Umwicklung der Werkzeugeinheit 9 mit dem bandförmigen Fasermaterial 5 wird dieses formschlüssig an der Umfangsfläche des Formwerkzeuges 2 und der Umfangsfläche des Preformlings 8 angelegt und bildet so die Proform 4 des Felgenbettes.

Das Fasermaterial 5 wird mittels einer stationären Stützvorrichtung 11 mit Andruckrollen 12 zusätzlich geführt und entsprechend der umlaufenden Kontur des Formwerkzeuges 2 auf diesem fixiert. Die Andruckrollen 12 sind jeweils auf einen Übergang der Umfangskontur des Formwerkzeuges 2 ausgerichtet. Während der Rotation des Formwerkzeuges 2 um die Rotationsachse 10 wird in einer Relativbewegung der Andruckrollen 12 gegenüber dem Formwerkzeug 2 das Fasermaterial 5 entlang der Umfangskontur des Formwerkzeuges 2 angedrückt.

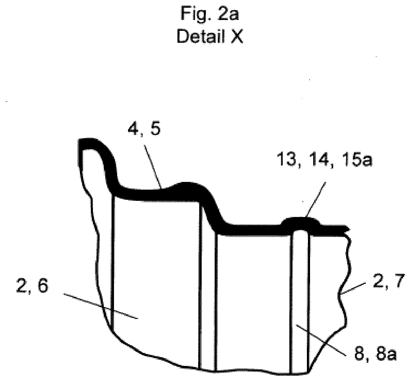

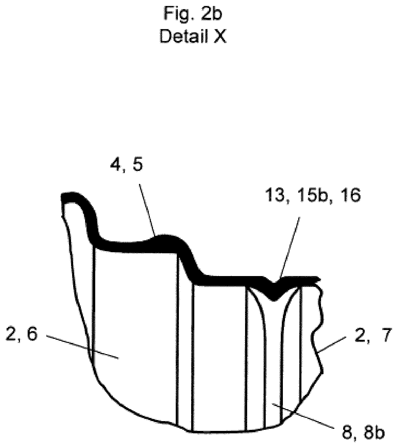

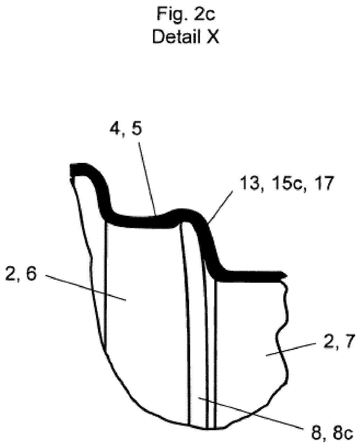

Das gestrichelt eingekreiste Detail X in Fig. 1 zeigt eine umlaufende Verbindungsstelle 13 der Preform 4 mit dem Preformling 8, die in Fig. 2a in einem vergrößerten Auszug der Werkzeugeinheit 9 wiedergegeben ist. Die Fign. 2b und 2c zeigen alternative Anbindungsvarianten zur Verbindungsstelle 13 nach Fig. 2a. Die Verbindungsstelle 13 in Fig. 2a wird durch einen Preformling 8a gebildet, dessen umlaufender Rand einen radialen, umlaufenden Überstand 14 über das Formwerkzeug 2, respektive über dessen beide Teilwerkzeuge 6, 7 aufweist, so dass eine Hinterschnittverbindung 15a mit einer konvexen Ausformung des aufliegenden Fasermaterials 5 entlang der Kontur 3 des Felgenbettes entsteht. Fig. 2b zeigt einen Preformling 8b, dessen umlaufender Rand eine radiale, umlaufende Vertiefung 16 gegenüber dem Formwerkzeug 2, respektive über dessen beide Teilwerkzeuge 6, 7 aufweist, so dass eine Hinterschnittverbindung 15b mit einer konkaven Ausnehmung des aufliegenden Fasermaterials 5 entlang der Kontur 3 des Felgenbettes entsteht. Die Vertiefung 16 kann, wie in Fig. 2b gezeigt, beispielsweise durch Drapieren des umlaufenden Randes des Preformlings 8 erzeugt werden.

Fig. 2c zeigt einen Preformling 8c in Anbindung an einen radialen Übergang 17 der Kontur 3 des Felgenbettes zwischen einem Hochbett und einem Tiefbett. Hiermit ergibt sich eine Hinterschnittverbindung 15c mit seitlicher Anlage des Fasermaterials 5 an dem Preformling 8.

Das Anlegen des Fasermaterials 5 im Bereich der umlaufenden formschlüssigen Hinterschnittverbindungen 15a, 15b, 15c kann zusätzlich durch spezielle, auf die jeweilige Hinterschnittverbindung 15a, 15b, 15c ausgerichtete und angepasste Andruckrollen (nicht dargestellt) unterstützt und präzisiert werden.

Damit wird in der Vorfertigungsphase zur Herstellung der Preform 4 des Felgenbettes als ein Bauelement der Radfelge zugleich der Fügevorgang mit anderen Bauelementen (hier betreffend den Preformling 8 in seinen alternativen Ausprägungen 8a, 8b, 8c) integriert und beide Vorgänge fertigungstechnisch zu einem Fertigungsvorgang verknüpft. Die derart erzeugten und verbundenen Bauelemente bilden die zusammengesetzte Preform 18 der Radfelge.

Die Bauelemente werden während des Konsolidierungsprozesses in ihrem Kontaktbereich miteinander verschmolzen und verharzt und ergeben so die fertige Radfelge. Die Hinterschnittverbindungen 15a, 15b, 15c vergrößern dabei nicht nur den Formschluss zwischen der Preform 4 des Felgenbettes und dem Preformling 8a, 8b oder 8c sondern auch die für den Stoffschluss zur Verfügung gestellten Kontaktflächen. Dies ergibt eine hohe mechanische Beanspruchbarkeit der Gesamtstruktur der Preform 18 der Radfelge und der fertiggestellten Radfelge.

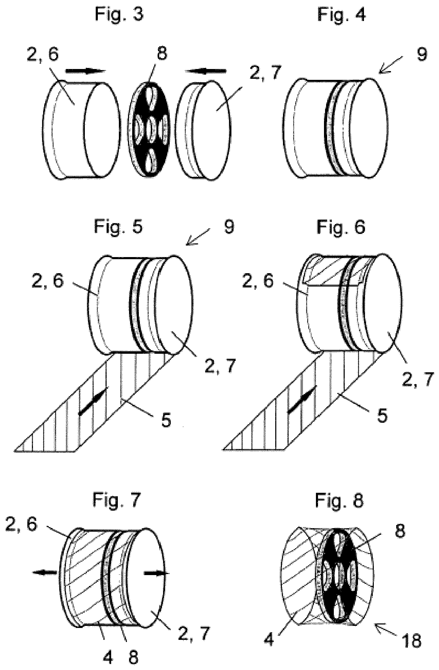

In den Figuren 3 bis 8 wird der Verlauf der erfindungsgemäßen Herstellung einer Radfelge in sechs Herstellungsphasen stilisiert dargestellt.

In einer ersten Herstellungsphase nach Fig. 3 werden die beiden Teilwerkzeuge 6, 7 des Formwerkzeuges 2, welche jeweils einen Teil der Kontur 3 des Felgenbettes der Radfelge abbilden, unter Zwischenlage des Preformlings 8 für die Radscheibe zur Werkzeugeinheit 9 zusammengefügt.

Gemäß Fig. 4 wird die komplettierte Werkzeugeinheit 9 für den maschinellen Bandwickelprozess bereitgestellt.

In einer dritten und vierten Herstellungsphase nach Fig. 5 und 6 wird die Werkzeugeinheit 9 in Rotation versetzt und dabei das bandförmige Fasermaterial 5 auf die Werkzeugeinheit 9 aufgezogen, wobei diese mehrfach mit dem Fasermaterial 5 umwickelt wird. Hierbei wird die Preform 4 des Felgenbettes gebildet und gleichzeitig mit dem Preformling 8 formschlüssig verbunden.

Fig. 7 zeigt die Herstellungsphase der Entformung der aus der Preform 4 und des Preformling 8 verbundenen Preform 18 der Radfelge. Die beiden Teilwerkzeuge 6, 7 des Formwerkzeuges 2 seitwärts in der jeweils gezeigten Pfeilrichtung entfernt.

In Fig. 8 ist die entformte Preform 18 der Radfelge dargestellt, welche die Preform 4 des Felgenbettes in Verbindung mit dem Preformling 8 der Radscheibe umfasst. Dieser Preform 18 bildet das Zwischenprodukt vor deren Konsolidierung auf dem Weg zur Fertigstellung der Radfelge. Der Vorgang der Konsolidierung kann alternativ auch vor der Entformung der Preform 18, also vor dem Entfernen der Teilwerkzeuge 6, 7 des Formwerkzeuges 2 in der Herstellungsphase nach Fig. 7 erfolgen.

Mit dem vorbeschriebenen, erfindungsgemäßen Verfahren kann die Herstellung der Radfelge durchgängig maschinell erfolgen, wobei das maschinelle Verbinden der Bauelemente 4, 8 der Radfelge zuverlässig und mit geringem fertigungstechnischem Aufwand erfolgt.
- 1: Bandwickelanordnung
- 2: Formwerkzeug
- 3: Kontur des Felgenbettes
- 4: Preform des ersten Bauelementes, Preform des Felgenbettes,
- 5: Fasermaterial
- 6: Teilwerkzeug des Formwerkzeuges
- 7: Teilwerkzeug des Formwerkzeuges
- 8: zweites Bauelement, Preformling der Radscheibe a, b, c
- 9: Werkzeugeinheit
- 10: Rotationsachse der Werkzeugeinheit
- 11: Stützvorrichtung
- 12: Führungselemente, Andruckrollen
- 13: Verbindungsstelle
- 14: umlaufender Überstand
- 15: Hinterschnittverbindung a, b, c
- 16: umlaufende Vertiefung
- 17: radialer Übergang der Kontur des Felgenbettes
- 18: Preform der Radfelge

## Patentansprüche

1. Verfahren zur Herstellung eines hohlprofilartigen Bauteils, insbesondere zur Herstellung einer Radfelge zum Einsatz in der Kraftfahrzeugtechnik, bestehend aus einem ersten, hohlprofilierten Bauelement (4) aus Faserverbundwerkstoff und einem zweiten Bauelement (8), wobei zur Vorfertigung des ersten Bauelements (4) eine Preform (4) dieses Bauelements (4) als Zwischenprodukt gebildet wird, welches durch Ablage eines Fasermaterials (5) auf einem die Kontur (3) des ersten, hohlprofilierten Bauelements (4) abbildenden Formwerkzeug (2) zu einem Fasergebilde entsprechend der Bauteilgeometrie des ersten Bauelements (4) geformt wird, und das Zwischenprodukt anschließend durch Konsolidierung verfestigt wird, wobei während der Bildung der Preform (4) des ersten Bauelements die Preform (4) mit dem zweiten Bauelement (8) formschlüssig verbunden wird, wobei das zweite Bauelement (8) derart dimensioniert ist und von dem mehrteilig ausgebildeten Formwerkzeug (2, 6, 7) eingeschlossen angeordnet wird, dass beim Ablegen des Fasermaterials (5) auf dem die Kontur (3) des ersten Bauelements (4) abbildenden Formwerkzeug (2, 6, 7) und auf dem zweiten Bauelement (8) eine von der des Formwerkzeugs (2, 6, 7) abgesetzte Kontur des zweiten Bauelements (8) zumindest teilweise umschlossen wird, **dadurch gekennzeichnet, dass** das zweite Bauelement(8) derart dimensioniert und angeordnet ist, dass es im Verhältnis zur Umfangskontur des Formwerkzeuges (2) einen radialen, vorzugsweise umlaufenden Überstand (14) über dem Formwerkzeug (2) und/oder eine radiale, vorzugsweise umlaufende Vertiefung (16) gegenüber dem Formwerkzeug (2) bildet, sodass eine Hinterschnittverbindung (15a, 15b) mit einer konvexen Ausformung oder mit einer konkaven Ausformung des aufliegenden Fasermaterials (5) entlang der Kontur (3) entsteht.

2. Verfahren nach Anspruch 1,
**dadurch gekennzeichnet, dass**
während der Konsolidierung der Preform (4) des ersten Bauelements die Preform (4) mit dem zweiten Bauelement (8) stoffschlüssig verbunden wird.

3. Verfahren nach einem der Ansprüche 1 oder 2,
**dadurch gekennzeichnet, dass**
die Preform (4) durch Umflechten des Formwerkzeuges (2) mittels Faserflechtfäden und/oder durch Bandwickeln von Faserstrengen um das Formwerkzeug (2) und/oder durch Tapelegen von textilem flächigem Fasermaterial auf das Formwerkzeug (2) gebildet wird.

4. Verfahren nach einem der Ansprüche 1 bis 3,
**dadurch gekennzeichnet, dass**
das Fasermaterial (5) durch eine Stützvorrichtung (11) an die Kontur des Formwerkzeuges (2) und/oder an die Kontur des zweiten Bauelementes (8) angedrückt wird

5. Verfahren nach Anspruch 4,
**dadurch gekennzeichnet, dass**
die Stützvorrichtung (11) drehbewegliche Führungselemente (12) aufweist.

6. Verfahren nach einem der Ansprüche 1 bis 5,
**dadurch gekennzeichnet, dass**
das zweite Bauelement (8) aus Faserverbundwerkstoff oder aus Metall besteht.

7. Verfahren nach einem der Ansprüche 1 bis 5,
**dadurch gekennzeichnet, dass**
mit der Preform (4) zu verbindende zweite Bauelement (8) ein Preformling (8a, b, c) ist, der aus Fasermaterial besteht

8. Verfahren nach einem der Ansprüche 1 bis 7,
**dadurch gekennzeichnet, dass**
das erste Bauelement (4) ein Felgenbett einer Radfelge ist.

9. Verfahren nach einem der Ansprüche 1 bis 8,
**dadurch gekennzeichnet, dass**
das zweite Bauelement (8) eine Radscheibe ist.

10. Verfahren nach Anspruch 9,
**dadurch gekennzeichnet, dass**
die mit der Preform (4) des Felgenbetts zu verbindende Radscheibe (8) zwischen zwei die Kontur (3) des Felgenbetts abbildenden Teilwerkzeugen des Formwerkzeuges(2) angeordnet ist.

11. Verfahren nach einem der Ansprüche 1 bis 10,
**dadurch gekennzeichnet, dass**
die Konsolidierung der Preform (4) und/oder des Preformlings (8a, b, c) mittels einer Injektion, vorzugsweise mittels Harzinjektion, erfolgt.

12. Verfahren nach einem der Ansprüche 1 bis 11,
**dadurch gekennzeichnet, dass**
bei der Konsolidierung der Preform (4) und/oder des Preformlings (8 a, b, c) ein Gegenformwerkzeug eingesetzt wird.

## Claims

1. Method for producing a hollow profile component, in particular, for the producing of a wheel rim for use in automotive technology, consisting of a first, hollow-profiled component (4) made of fibre composite material and a second component (8), wherein, for the prefabrication of the first component (4), a preform (4) of this component (4) is formed as an intermediate product, which by laying a fibre material (5) onto a moulding tool (2) depicting the contour (3) of the first, hollow-profiled component (4) is formed into a fibre structure according to the component geometry of the first component (4), and the intermediate product is subsequently solidified by means of consolidation, wherein, during the formation of the preform (4) of the first component, the preform (4) is connected to the second component (8) in a positive-locking manner, wherein the second component (8) is dimensioned in such a way and arranged in an enclosed manner by the moulding tool (2, 6, 7) composed of multiple parts that, when laying the fibre material (5) on the moulding tool (2, 6, 7) depicting the contour (3) of the first component (4) and on the second component (8), a contour of the second component (8) that is offset from the contour of the moulding tool (2, 6, 7) is at least partially enclosed, **characterized in that** the second component (8) is arranged and dimensioned in such a way, that it forms, in relation to the circumferential contour of the moulding tool (2), a radial, preferably circumferential supernatant (14) above the moulding tool (2) and/or a radial, preferably circumferential recess (16) with relation to the moulding tool (2) so that an undercut connection (15a, 15b) with a convex formation or with a concave formation of the overlying fibre material (5) is formed along the contour (3).

2. Method according to Claim 1,
**characterized in that**, during the consolidation of the preform (4) of the first component, the preform (4) is bonded to the second component (8) in a substance-to-substance manner.

3. Method according to one of the Claims 1 or 2, **characterized in that** the preform (4) is formed by braiding the moulding tool (2) by means of fibre braid threads and/or by tape wrapping of fibre strands around the mould (2) and/or by laying tape composed of a textile flat fibre material onto the mould (2).

4. Method according to one of the Claims 1 to 3, **characterized in that** the fibre material (5) is pressed by a support device (11) onto the contour of the moulding tool (2) and/or onto the contour of the second component (8).

5. Method according to Claim 4,
**characterized in that** the support device (11) has rotatable guide elements (12).

6. Method according to one of the Claims 1 to 5, **characterized in that** the second component (8) is made of a fibre composite or made of metal.

7. Method according to one of the Claims 1 to 5, **characterized in that** with the preform (4) to be connected second component (8) is a preformed part (8a, b, c) which consists of fibre material.

8. Method according to one of the Claims 1 to 7, **characterized in that** the first component (4) is a rim base of a wheel rim.

9. Method according to one of the Claims 1 to 8, **characterized in that** the second component (8) is a wheel disc.

10. Method according to Claim 9,
**characterized in that** the wheel disc (8) to be connected to the preform (4) of the rim base is arranged between two tool components of the moulding tool (2) depicting the contour (3) of the rim base.

11. Method according to one of the Claims 1 to 10, **characterized in that** the consolidation of the preform (4) and/or the preformed part (8a, b, c) is carried out by means of an injection, preferably by means of resin injection.

12. Method according to one of the Claims 1 to 11, **characterized in that**, when consolidation of the preform (4) and/or the preformed part (8 a, b, c), a counter moulding tool is used.

## Revendications

1. Procédé, destiné à fabriquer un élément constitutif de type profilé creux, notamment à fabriquer une jante de roue utilisée dans la construction automobile, composé d'un premier élément constitutif (4) profilé avec un creux, en une matière composite renforcée par fibres et d'un deuxième élément constitutif (8), pour la préfabrication du premier élément constitutif (4), une préforme (4) dudit élément constitutif (4) étant créée en tant que produit intermédiaire, que l'on façonne par dépôt d'une matière fibreuse (5) sur un outil de formage (2) reproduisant le contour (3) du premier élément constitutif (4) profilé avec un creux, en une structure fibreuse correspondant à la géométrie du premier élément constitutif (4), et le produit intermédiaire étant ensuite solidifié par consolidation, pendant la création de la préforme (4) du premier élément constitutif, la préforme (4) étant assemblée par complémentarité de forme avec le deuxième élément constitutif (8), le deuxième élément constitutif (8) étant dimensionné de telle sorte et étant placé de matière à être enfermé dans l'outil de formage (2, 6, 7) constitué en plusieurs parties, de sorte que lors de la dépose de la matière fibreuse (5) sur l'outil de formage (2, 6, 7) reproduisant le contour (3) du premier élément constitutif (4) et sur le deuxième élément constitutif (8), un contour du deuxième élément constitutif (8) déporté de l'outil de formage (2, 6, 7) soit entouré au moins en partie, **caractérisé en ce que** le deuxième élément constitutif (8) est dimensionné et placé de sorte à créer en rapport au contour périphérique de l'outil de formage (2) un surplomb (14) radial, de préférence périphérique au-delà de l'outil de formage (2) et/ou un creux (16) radial, de préférence périphérique par rapport à l'outil de formage (2), de sorte à donner naissance à un assemblage par contre-dépouille (15a, 15b) avec une empreinte convexe ou avec une empreinte concave de la matière fibreuse (5) déposée, le long du contour (3).

2. Procédé selon la revendication 1,
**caractérisé**
**en ce que** pendant la consolidation de la préforme (4) du premier élément constitutif, on assemble par matière la préforme (4) avec le deuxième élément constitutif (8).

3. Procédé selon l'une quelconque des revendications 1 ou 2, **caractérisé**
**en ce que** 1' on créé la préforme (4) par tressage de l'outil de formage (2) avec des fils de tressage fibreux et/ou par enroulement de bandes de filaments de fibre autour de l'outil de formage (2) et/ou par pose de plis d'une matière fibreuse textile en nappe sur l'outil de formage (2).

4. Procédé selon l'une quelconque des revendications 1 à 3, **caractérisé**
**en ce que** l'on appuie la matière fibreuse (5) à l'aide d'un dispositif de soutien (11) sur le contour de l'outil de formage (2) et/ou sur le contour du deuxième élément constitutif (8).

5. Procédé selon la revendication 4,
**caractérisé**
**en ce que** le dispositif de soutien (11) comporte des éléments de guidage (12) mobiles en rotation.

6. Procédé selon l'une quelconque des revendications 1 à 5, **caractérisé**
**en ce que** le deuxième élément constitutif (8) est constitué d'une matière composite renforcée par fibres ou de métal.

7. Procédé selon l'une quelconque des revendications 1 à 5, **caractérisé**
**en ce que** le deuxième élément constitutif (8) qui doit être assemblé avec la préforme (4) est une ébauche (8a, b, c), qui est constituée d'une matière fibreuse.

8. Procédé selon l'une quelconque des revendications 1 à 7, **caractérisé**
**en ce que** le premier élément constitutif (4) est un lit de jante d'une jante de roue.

9. Procédé selon l'une quelconque des revendications 1 à 8, **caractérisé**
**en ce que** le deuxième élément constitutif (8) est un disque de roue.

10. Procédé selon la revendication 9,
**caractérisé**
**en ce que** le disque de roue (8) qui doit être assemblé avec la préforme (4) du lit de jante est placé entre deux outils partiels de l'outil de formage (2) reproduisant le contour (3) du lit de jante.

11. Procédé selon l'une quelconque des revendications 1 à 10, **caractérisé**
**en ce que** la consolidation de la préforme (4) et/ou de l'ébauche (8a, b, c) s'effectue par une injection, notamment par injection de résine.

12. Procédé selon l'une quelconque des revendications 1 à 11, **caractérisé**
**en ce que** lors de la consolidation de la préforme (4) et/ou de l'ébauche (8 a, b, c), l'on met en œuvre un outil de formage antagoniste.
